# EUROPÄISCHE PATENTANMELDUNG

(11) **EP 1 227 699 A2**
(43) Veröffentlichungstag der Anmeldung: **31.07.2002**
(21) Anmeldenummer: 02100032.8
(22) Anmeldetag: 17.01.2002
(51) Int. Cl.: H04Q 11/04

(54) **Verfahren zur Steuerung von Multimediatransporten**

(30) Priorität: 24.01.2001 DE 10103101
(71) Anmelder: SIEMENS AKTIENGESELLSCHAFT, 80333 München (DE)
(72) Erfinder: Schauer, Günther, 85716, Unterschleissheim (DE); Tannhäuser, Armin, 81369, München (DE)

(57) **Zusammenfassung**

Bei dem anmeldungsgemäßen Verfahren werden in einem SDSL-Rahmen einer SDSL-Datenverbindung die betrieblichen Bits und Signalisierungsbits für den zeitmultiplex-basierten Telefonie-Dienst sowie für den ISDN-Dienst auf der Basis eines gemeinsamen Adressenfeldes verarbeitet.

## Beschreibung

Die gleichzeitige Nutzung von Telefon- bzw. ISDN-Netz (Integrated Services Digital Network / Diensteintegrierendes Netz) und Internet für vielfältige Dienste hat den Multimediatransport zu einer der wichtigsten Informationstechnologien gemacht. Das Interesse gilt universellen Systemen zum flexiblen Anschluß der verschiedenen Teilnehmerendeinrichtungen für herkömmliche Telefonie- / ISDN- oder Breitbandanwendungen. Dabei werden für das Übertragungsformat sowohl Zeitmultiplex- als auch ATM-Verfahren (Asynchronous Transfer Mode / Asynchroner Übermittlungsbetrieb) verwendet, wobei ADSL (Asymmetric Digital Subscriber Line / Asymmetrische Digitale Teilnehmerleitung) und SDSL (Symmetric Digital Subscriber Line / Symmetrische Digitale Teilnehmerleitung) die bevorzugten Breitbandübertragungsverfahren auf der klassischen Teilnehmeranschlußleitung sind. Mit der SDSL-Technik werden die Informationen einer oder mehrerer Breitbandverbindungen sowie ISDN- oder herkömmlicher Telefonieverbindungen innerhalb eines einzigen Frequenzbandes übertragen.

Für die nachfolgenden Betrachtungen wird ein Datentransport mittels eines SDSL-Rahmens betrachtet. In diesem Rahmen werden auf definierten Bitpositionen die Nutzinformationsbits, die Signalisierungsbits für eine bestimmte Verbindung sowie die betrieblichen Bits übertragen.

Es ist bekannt, daß für die verschiedenen Anwendungen die betrieblichen Bits und die Signalisierungsbits innnerhalb des SDSL-Rahmens im sogenannten eoc-Kanal (embedded operations channel / Eingebetteter Betriebskanal) oder in einem bzw. mehreren als Erweiterung vorgesehenen 8-kbit/s-Z-Kanälen oder in einem 64-kbit/s-B-Kanal übertragen werden können. In einem ebenfalls bekannten Beispiel werden nach Standard ITU G.991.2 die betrieblichen Bits des zeitmultiplex-basierten ISDN-Dienstes und die betrieblichen Bits einer ATM-basierten Anwendung durch einheitlich festgelegte Adressierungsbits voneinander unterschieden. Dabei weist für ISDN das Adreßfeld die Komponenten Service-ID (Identification / Identifizierung) und Service-Nr. auf, welche für eine eindeutige Adressierung einer bestimmten Verbindung notwendig sind. Hierbei wird eine bestimmte Service-Nr. innerhalb eines Service-Typs (eine aus mehreren ISDN-Verbindungen) adressiert. Ebenfalls bekannt ist der Vorschlag, den zeitmultiplex-basierten herkömmlichen Telefonie-Dienst durch eine eigene Sercice-ID zu kennzeichnen, sowie weiterhin die Signalisierungsinformation und betriebliche Information für eine bestimmte Telefonieverbindung entsprechend dem europäischen Standard ETSI EN 300 324-1 zu definieren.

Der Erfindung liegt die Aufgabe zugrunde, eine weitere Systemlösung zur SDSL-Kommunikation mit zeitmultiplex-basierten Telefonie- und ISDN-Diensten simultan mit ATM-basierten oder zeitmultiplex-basierten Breitbandanwendungen anzugeben.

Gemäß der Erfindung wird die Aufgabe durch die Patentansprüche eins bis fünf gelöst.

Die Erfindung bringt den Vorteil mit sich, daß für die Verarbeitung der Signalisierungsinformation und der betrieblichen Information des zeitmultiplex-basierten Telefoniedienstes und des ISDN-Dienstes eine einheitliche Schaltungsanordnung verwendet werden kann.

Weitere Besonderheiten der Erfindung werden aus den nachfolgenden näheren Erläuterungen der Ausführungsbeispiele und anhand von Zeichnungen deutlich.

Es zeigen:
- Figur 1: eine Aufteilung eines SDSL-Rahmens,
- Figur 2: ein Ausführungsbeispiel einer SDSL-Systemarchitektur für die Verarbeitung der Signalisierung und der betrieblichen Bits des ISDN-Dienstes in einem System ohne Telefonie-Dienst.
- Figur 3: ein Ausführungsbeispiel für Messagekodierung und Messageinhalt für den ISDN-Dienst in einem SDSL-System ohne Telefonie-Dienst,
- Figur 4: ein Ausführungsbeispiel einer SDSL-Systemarchitektur gemäß der Erfindung
- Figur 5: ein Ausführungsbeispiel für einen Messageinhalt mit einer Messagekodierung gemäß der Erfindung

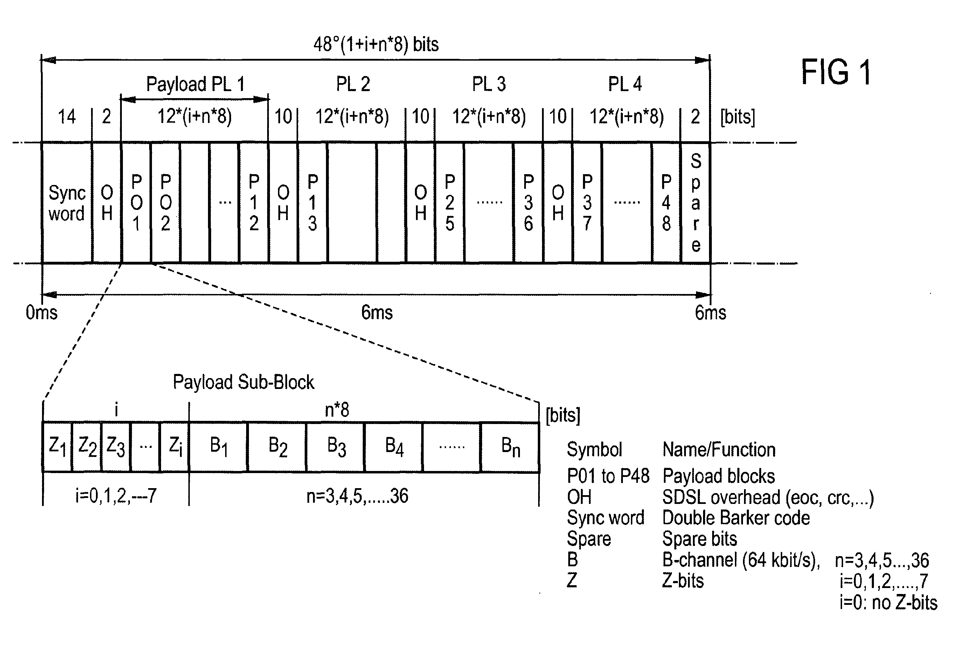

Figur 1 zeigt die bereits bekannte Aufteilung eines SDSL-Rahmens. Der SDSL-Rahmen ist dabei in vier Payloadblöcke (Nutzinformationsblöcke) PL1, PL2, PL3 und PL4 unterteilt. Jeder Payloadblock PL1, PL2, PL3, PL4 ist dabei in 12 Payload-Sub-Blöcke P01 bis P12, P13 bis P24, P25 bis P36 und P37 bis P48 untergliedert.

Jeder Sub-Block kann in bis zu 7 Z-Kanäle mit jeweils 8 kbit/s und bis zu 36 B-Kanäle mit jeweils 64 kbit/s unterteilt werden. Dabei enthält jeder Z-Zeitschlitz 1 Bit und jeder B-Zeitschlitz 8 Bit. In den Z-Zeitschlitzen oder in einem B-Zeitschlitz können Signalisierungsbits sowie betriebliche Bits für Telefonie- bzw. ISDN-Verbindungen übertragen werden. Die Informationsbits der B1- und B2-Kanäle einer ISDN-Verbindung werden in 2 aufeinanderfolgenden B-Zeitschlitzen einer SDSL-Verbindung übertragen. Die digitalisierten Daten der Telefonie-Verbindungen werden ebenfalls in SDSL-B-Zeitschlitzen übertragen, wobei jeweils einer Telefonie-Verbindung genau ein B-Zeitschlitz zugeordnet ist. Die Daten von ATM- oder zeitmultiplex-basierten Breitbandanwendungen werden in einer weiteren jeweils benötigten Anzahl von B-Zeitschlitzen zusammengefasst. Die Gesamtzahl der B-Zeitschlitze ist durch die Übertragungsgeschwindigkeit des aktuellen SDSL-Systems bestimmt und liegt wie in Figur 1 angegeben zwischen 3 und 36.

Im Rahmenabschnitt OH sind Overheaddaten (Daten über die Nutzinformation hinaus) untergebracht, die Statusinformationen sowie den eoc-Kanal mit etwa 3,3 kbit/s enthalten.

Außerdem beinhaltet der SDSL-Rahmen am Beginn ein 14 Bit breites Rahmenwort (Sync Word / Synchronisierwort) für die Synchronisation und zwei unbenutzte Bits (Spare / Frei) am Rahmenende.

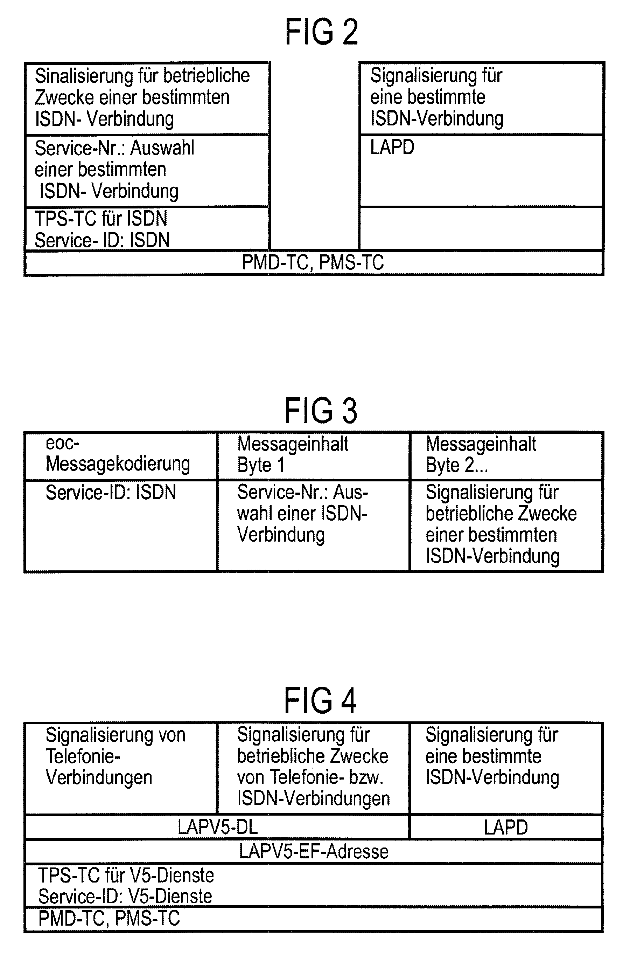

Figur 2 zeigt ein bekanntes Beispiel einer SDSL-Systemarchitektur zum Betrieb von ISDN-Verbindungen nach ETSI TS 101 524 und ITU G.991.2. Hierbei kennzeichnen PMD-TC und PMS-TC (Physical Media Dependent - Transmission Convergence / Abhängig vom physikalischen Medium - Übertragungskonvergenz und Physical Media Specific - Transmission Convergence / Spezifisch für das physikalische Medium) den anwendungsunabhängigen Teil des SDSL-Transportsystems für die Teilnehmeranschlußleitung nach den Standards ETSI TS 101 524 und ITU G.991.2. Die unmittelbar darüberliegende Schicht TPS-TC (Transmission Protocol Spezific / Übertragungsprotokollspezifisch) enthält standardgemäß die Service-ID "ISDN", und die darüberliegenden Schichten enthalten die Service-Nr. zur Auswahl einer bestimmten ISDN-Verbindung bzw. die Signalisierung für betriebliche Zwecke einer bestimmten ISDN-Verbindung. Separat wird die Signalisierung für eine bestimmte ISDN-Verbindung im zugeordneten D-Kanal und in der Sicherungsschicht LAPD ( Link Access Protocol D / Verbindungszugangsprotokoll D) abgewickelt.

Figur 3 zeigt die entsprechende standardgemäße Messagestruktur mit der Service-ID "ISDN" in der Messagekodierung, mit der Service-Nr in Byte 1 des Messageinhalts zur Auswahl einer bestimmten ISDN-Verbindung und ab Byte 2 mit der Signalisierung für betriebliche Zwecke einer bestimmten ISDN-Verbindung. Diese SDSL-Protokollarchitektur für ISDN unterstützt nicht den Betrieb von herkömmlichen Telefonieverbindungen.

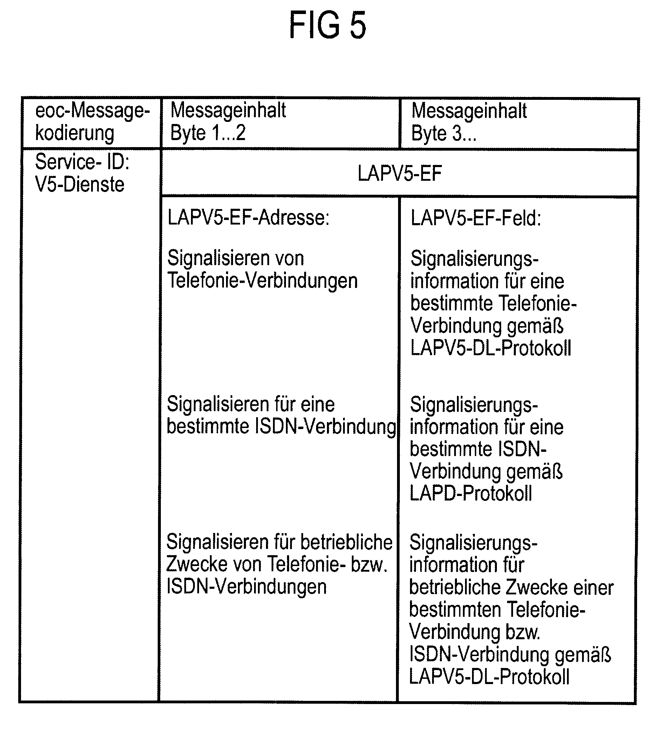

Figur 4 zeigt ein Beispiel einer SDSL-Systemarchitektur gemäß der Erfindung, die sowohl den Betrieb von Telefonieverbindungen als auch den Betrieb von ISDN-Verbindungen und die Mischung von beiden unterstützt.Das Protokoll basiert auf der standardisierten V5-Signalisierung. Während sich PMD-TC und PMS-TC wie im Beispiel der Figur 2 darstellen, enthält TPS-TC hier erfindungsgemäß die weitere Sercice-ID "V5-Dienste". Die darüberliegenden Schichten sind durch den Standard ETSI EN 300 324 definiert. Die Adressenschicht "LAPV5-EF - Adresse" (Link Access Protocol, V5 - Envelope Function / Einhüllende Funktion) kennzeichnet verschiedene, zusammen mit Figur 5 beschriebene Protokollaufgaben. LAPV5-DL (Data Link / Datenverbindung) und LAPD dienen zur Transportsicherung. Die Protokolle dienen zur Signalisierung für eine bestimmte Telefoniebzw. ISDN-Verbindung und zur Erfüllung betrieblicher Zwecke für eine bestimmte Telefonie- bzw. ISDN-Verbindung.

Figur 5 zeigt den erfindungsgemäß für V5-Dienste, d.h. für Telefonie- und ISDN-Dienste einheitlichen Messageaufbau für Verbindungssignalisierung und betriebliche Zwecke. Da die V5-Dienste in einer einheitlichen Protokollstruktur entsprechend ETSI EN 300 324 betrieben werden können, ist es technisch und wirtschaftlich vorteilhaft, diese Dienste mit einer einheitlichen Schaltungsanordnung zu realisieren. Hierzu werden sie erfindungsgemäß in der Messagekodierung mit einer einzigen weiteren Service-ID "V5-Dienste" zur Verarbeitung aller Signalisierungsprotokolle zusammengefaßt. Die darauffolgenden Adressen- und Informationsfelder im Messageinhalt werden standardgemäß nach ETSI EN 300 324 dargestellt. In Byte 1 und 2 werden mit der LAPV5-EF-Adresse die verschiedenen Protokollaufgaben unterschieden:
(a) Signalisieren von Telefonie-Verbindungen,
(b) Signalisieren für eine bestimmte ISDN-Verbindung,
(c) Signalisieren für betriebliche Zwecke von Telefoniebzw. ISDN-Verbindungen.
Ab Byte 3 enthält ein LAPV5-EF-Informationsfeld
für die Aufgabe (a):
die Signalisierungsinformation für eine bestimmte Telefonie-Verbindung gemäß LAPV5-DL-Protokoll,
für die Aufgabe (b):
die Signalisierungsinformation für eine bestimmte ISDN-Verbindung gemäß LAPD-Protokoll,
für die Aufgabe (c):
die Signalisierungsinformation für betriebliche Zwecke einer bestimmten Telefonie- bzw. ISDN-Verbindung gemäß LAPV5-DL-Protokoll.

## Patentansprüche

1. Verfahren zur Steuerung einer oder mehrerer zeitmultiplexbasierter Telefonie- und ISDN-Verbindungen über ein SDSL-Übertragungssystem, in welchem Service-IDs für verschiedene Kommunikationsdienste vergeben werden,
**dadurchgekennzeichnet,**
daß eine weitere Service-ID für Telefonie- und ISDN-Kommunikation vergeben wird.

2. Verfahren nach Anspruch 1,
**dadurch gekennzeichnet,**
**daß** durch die weitere Service-ID durch Subadressen zwischen dem Signalisieren von Telefonie-Verbindungen oder dem Signalisieren für eine bestimmte ISDN-Verbindung oder dem Signalisieren für betriebliche Zwecke von Telefonie bzw. ISDN-Verbindungen unterschieden wird.

3. Verfahren nach Anspruch 2,
**dadurch gekennzeichnet,**
**daß** die Subadressen durch LAPV5-EF-Adressen nach ETSI EN 300 324 gebildet werden.

4. Verfahren nach Anspruch 2,
**dadurch gekennzeichnet,**
**daß** das Signalisieren von Telefonie-Verbindungen oder das Signalisieren für betriebliche Zwecke von Telefonie- bzw. ISDN-Verbindungen nach dem Protokoll LAPV5-DL nach ETSI EN 300 324 abgewickelt wird.

5. Verfahren nach Anspruch 2,
**dadurch gekennzeichnet,**
**daß** das Signalisieren für eine bestimmte ISDN-Verbindung nach dem Protokoll LAPD nach ETSI EN 300 324 abgewickelt wird.
